(19) Europäisches Patentamt
European Patent Office
Office européen des brevets

(11) Veröffentlichungsnummer : **0 167 873**
**B1**

(12) # EUROPÄISCHE PATENTSCHRIFT

(45) Veröffentlichungstag der Patentschrift : **04.03.87**

(51) Int. Cl.⁴ : **E 21 B 43/22**

(21) Anmeldenummer : **85107314.8**

(22) Anmeldetag : **13.06.85**

(54) **Tensidmischung und deren Verwendung zur tertiären Ölförderung.**

(30) Priorität : **19.06.84 DE 3422613**

(43) Veröffentlichungstag der Anmeldung : **15.01.86 Patentblatt 86/03**

(45) Bekanntmachung des Hinweises auf die Patenterteilung : **04.03.87 Patentblatt 87/10**

(84) Benannte Vertragsstaaten : **DE FR GB IT**

(56) Entgegenhaltungen :
**DE-A- 2 558 548**
**US-A- 3 811 505**
**US-A- 3 981 361**

(73) Patentinhaber : **BASF Aktiengesellschaft**
**Carl-Bosch-Strasse 38**
**D-6700 Ludwigshafen (DE)**

(72) Erfinder : **Greif, Norbert, Dr.**
**Im Woogtal 3**
**D-6719 Bobenheim (DE)**
Erfinder : **Oppenlaender, Knut, Dr.**
**Otto-Dill-Strasse 23**
**D-6700 Ludwigshafen (DE)**
Erfinder : **Sewe, Kai-Udo, Dr.**
**Zuckmayerstrasse 8**
**D-2847 Barnstorf (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 167 873 B1

**Beschreibung**

Die vorliegende Erfindung betrifft Tensidmischungen aus Alkylphenolmonoglykolethersulfonat und Alkyl- und Alkylarylpolyglykolether sowie die Verwendung zur Gewinnung von Erdöl aus untertägigen Lagerstätten durch Fluten mit Wasser, das diese oberflächenaktive Stoffe enthält.

Es ist bekannt, daß bei der Gewinnung von Öl aus ölführenden Lagerstätten nur ein geringer Teil des ursprünglich vorhandenen Öls durch primäre und sekundäre Gewinnungsmaßnahmen zu fördern ist.

Eine Erhöhung der Ölausbeute gelingt durch tertiäre maßnahmen. Darunter versteht man ein Verfahren, bei dem entweder die Viskosität des Öls erniedrigt oder die Viskosität des nachflutenden Wassers erhöht wird, oder es handelt sich um Tensidflutprozesse, die in erster Linie auf einer starken Erniedrigung der Grenzflächenspannung zwischen Öl und Lagerstättenwasser bzw. Formationsgestein beruhen.

Die vorliegende Erfindung bezieht sich bezüglich der Verwendung des Tensidgemisches auf ein Verfahren zur Gewinnung von Öl durch Tensidfluten.

Eine Übersicht über die bisher verwendeten wichtigsten grenzflächenaktiven Verbindungen gibt die Literaturstelle: «Tenside für die Tertiärförderung von Erdöl im hochsalinaren System», Tenside Detergents 17 (1980), 2. K. Oppenländer, M. H. Akstinat, M. I. Murtarda.

Von den dort abgehandelten Tensiden sind besonders die Sulfonate für den vorliegenden Zweck wichtig. Gemäß EP-A 0 047 369 werden zwar wirksame Tenside auf Carboximethyletherbasis beschrieben. Eine besonders starke Adsorption an das Gestein im Gegensatz zu den Sulfonaten läßt aber einen Einsatz ungünstig erscheinen. Zudem bewirken Carboximethylether in der Nähe des Inversionstemperaturpunktes, bei dem das Tensid eingesetzt und wirksam ist, eine starke Verdickung des Öls; dies führt selbst bei relativ hochpermeablen künstlichen Formationen zu Druckgradienten von mehr als 40 bar/m und bei Übertragung in das Feld zu Drücken weit oberhalb des petrostatischen Druckes (H. Murtarda, M. Burkowsky, Erdöl Erdgas Zeitschrift *93*; 303 (1977)).

Als ölmobilisierende Tenside werden deshalb vor allem organische Sulfonate, wie Alkyl-, Alkylaryl- oder Petroleumsulfonate genannt. Diese besitzen eine sehr geringe Toleranzgrenze gegenüber der Salinität der Lagerstättenwasser. Salzkonzentrationen von 0,1 % mit besonderer Empfindlichkeit gegenüber zweiwertigen Ionen gelten hier schon als problematisch. Da jedoch viele Lagerstättenwasser Salinitäten bis zu 25 % haben, wie z. B. in Norddeutschland, können die Sulfonate allein nicht nutzbar gemacht werden. Gemäß der Lehre der kanadischen Patentschrift 1 026 666 und der US-Patentschrift 3 811 505 wurde daher schon versucht, diese Elektrolytempfindlichkeit durch Zugabe von Co-Surfactants wie Alkohole zu reduzieren, wobei aber die Wirksamkeit leidet.

Schließlich war die Verwendung allein von Alkylarylpolyglykolethersulfaten für die Sekundärförderung bekannt. Im Gegensatz zu den Alkylsulfonaten zeigen die Alkyl- bzw. Alkylarylpolyglycolethersulfate eine gute Verträglichkeit bei hohen Salinitäten, die Hydrolyseempfindlichkeit der Sulfatgruppe in sauren Medien bei erhöhter Temperatur, wie sie bei den meisten Lagerstätten vorkommen, schränkt aber die Verwendbarkeit stark ein.

Deshalb konnten die vorbekannten Tenside oder Tensidmischungen noch nicht bezüglich Entölungswirkung, Beständigkeit und Verträglichkeit bei hohen Salinitäten befriedigen.

Es bestand daher die Aufgabe eine Tensidmischung vorzuschlagen, die es erlaubt eine hohe Entölung der Lagerstätten bei guter Salzverträglichkeit zu bewirken.

Es wurde nun überraschenderweise gefunden, daß Tensidmischungen, enthaltend als wesentliche Bestandteile

a) ein anionenaktives Tensid der Formel

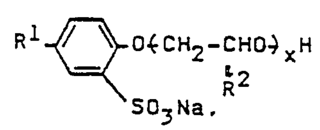

in der

$R^1$ eine geradkettige oder verzweigte Alkylgruppe mit 8 bis 15, vorzugsweise 8 bis 12 Kohlenstoffatomen,

$R^2$ Wasserstoff oder Methyl und

x die Zahlen 1 bis 2, vorzugsweise 1, bedeutet,

b) ein nichtionisches Tensid der Formel

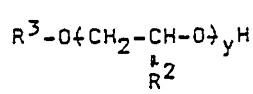

in der

$R^2$ Methyl- oder vorzugsweise Wasserstoff

$R^3$ eine aliphatische Gruppe, vorzugsweise eine geradkettige oder verzweigte Alkylgruppe mit 9 bis 24 Kohlenstoffatomen, insbesondere mit 12 bis 18 Kohlenstoffatomen, oder eine Alkylarylgruppe, in der zumindest eine geradkettige oder verzweigte Alkylgruppe mit 8 bis 15 Kohlenstoffatomen, vorzugsweise 9 bis 12 Kohlenstoffatomen, an den Arylrest, vorzugsweise den Benzolrest, gebunden ist,

y die Zahlen 3 bis 16, insbesondere 5 bis 10, bedeutet und wobei das Gewichtsverhältnis a : b 4 : 1 bis 1 : 10, vorzugsweise 2 : 1 bis 1 : 9 beträgt, hervorragend wirksam sind.

Mit wäßrigen Lösungen der erfindungsgemäßen Tensidmischungen lassen sich nämlich hohe Entölungsgrade von bis zu 97 % erzielen.

Das Glycolethersulfonat, das in salzhaltiger Lösung nur teilweise löslich ist, wird durch den Alkylpolyglycolether in Lösung gebracht, und die Mischung ist auch bei höheren Temperaturen in hochsalinaren Formationswässer hervorragend stabil. Das neue Tensidsystem weist mit $8 \cdot 10^{-3}$ mN/m eine sehr geringe Grenzflächenspannung gegen Rohöl auf ; dies ist eine wichtige Voraussetzung für eine gute Entölung (M. Burkowsky, C. Marx ; Erdöl-Erdgaszeitschrift, 95. Jg., Januar 1979). Gleichzeitig zeigt das System aber gegenüber Kohlenwasserstoffen eine gewisse erwünschte Labilität. Bei der Zugabe von Rohöl bildet sich eine Microemulsion, die aus Tensid, Kohlenwasserstoffen und Salzwasser besteht. Nach allgemeiner Meinung ist die Ausbildung einer Microemulsion eine Voraussetzung für eine gute Ölmobilisierung. Diese Eigenschaft wird im « Phasentest » geprüft, wobei gleiche Mengen Rohöl und Tensidlösung geschüttelt und dann bei höherer Temperatur gelagert werden. Die Ausbildung einer schwarzen opaleszenten leichtbeweglichen Zwischenphase ist eine Voraussetzung für ein wirksames Produkt. Insbesondere die erfindungsgemäße Mischung aus Dodecylphenolmonoglycolethersulfonat/Nonylphenol-oktaethoxilat (25 ml, 6 % im Formationswasser) bildet mit Rohöl (25 ml) bei 40 °C 7 ml einer solchen Zwischenphase.

Ferner hat die vorliegende Erfindung ein verbessertes Verfahren zur Ölgewinnung zum Gegenstand.

Gemäß diesem Verfahren sollen 1 bis 20 gew.%ige Lösungen eines vorgenannten Tensidgemisches in eine unterirdische Lagerstätte eingepreßt werden, deren Formationswasser eine hohe Gesamtsalinität aufweist mit nachfolgendem Einpressen von Formationswasser, das gegebenenfalls mit Biopolymeren, wie Xanthanen oder Cellulosederivaten, wie Hydroxiethylcellulose verdickt ist.

Das erfindungsgemäße Anionic-/Nonionic-Tensidgemisch hat gegenüber in der kanadischen Patentschrift 1 086 046 beschriebenen Verbindungen der Formel

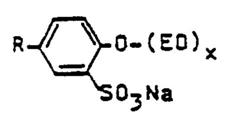

x = 3 - 20

und der aus DT 2 558 548 bekannten Verbindungen der Formel

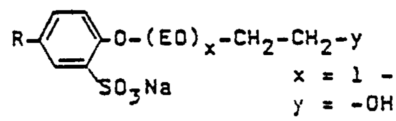

x = 1 - 8 EO
y = -OH oder
-$SO_3Na$

in denen die anionische und die nichtionische Komponente im gleichen Molekül vereint sind neben der allgemein verbesserten Entölungswirkung den Vorteil, daß es nur durch Veränderung des Anteils und der Art der nichtionischen Komponente den häufig variierenden Lagerstättenverhältnissen (Temperatur, Druck, Salinität des Lagerstättenwassers, Rohölzusammensetzung, Porosität und Kapazität der Gesteinsformationen usw.) angepaßt werden kann. Es ist ein besonderer Vorteil der Erfindung, das Gleichgewicht in Bezug auf Hydrophobie und Hydrophilie der Komponente auf einfache Weise einstellen zu können.

Im einzelnen führt man das Tensidfluten analog den Angaben des DE 25 58 548 aus, auf das hiermit Bezug genommen wird.

Die Wirksamkeit der neuen Tensidgemische wird an den folgenden Beispielen erläutert. Man verfährt dazu wie folgt : Die zu verwendenden Ethoxilate werden nach bekannten Methoden durch Umsetzung der Alkohole oder Alkylphenole mit der gewünschten Menge Ethylenoxid und alkalischer Katalyse (0,5 % KOH) bei 120 °C in Autoklaven erhalten. Zur Herstellung der Sulfonate wird 1 Mol Alkylphenol nach bekannten Methoden mit 1 Mol $ClSO_3H$ oder $SO_3$ bei 20 bis 50 °C umgesetzt. Die entstandene Sulfonsäure wird mit 50 %iger NaOH neutralisiert. Nach Zugabe von 5 Mol.-% NaOH wird die wäßrige Lösung bei 120 °C in Autoklaven mit 1 bis 2 Mol Ethylenoxid umgesetzt. Die überschüssige NaOH wird nach der Reaktion mit HCl neutralisiert.

Das Fluten mit der erfindungsgemäß zu verwendenden Tensidlösung kann entweder kontinuierlich oder in Form von Slugs, d. h. eines eng begrenzten Volumens vom 0,02- bis 0,5-fachen des Porenvolumens des Lagerstättengesteins, des Bohrkerns oder der Sandpackung, eingepreßt werden. Die Größe des Tensidlugs richtet sich nach der Tensidkonzentration und der Wirtschaftlichkeit. Die Konzentration beträgt meist 5 % mit einer Aufwandmenge des 0,1-fachen des Porenvolumens. Als

lineares Labormodell der Lagerstätte werden zur Prüfung Bohrkerne (100-300 mm Länge, 20-30 mm Durchmesser) aus Bendheimer Sandstein verwendet, die in Kunstharz oder Blei eingebettet werden. Zugleich werden die Prüfungen an Sandpackungen (Korngröße 0,03-0,15 mm, Porosität : 40 %, Permeabilität : 3 900 mD, Restwasser : 15 %) in thermostabilisierten Druckrohren von 25 oder 100 cm Länge und 20 mm Durchmesser durchgeführt.

Das Prüfmaterial wird vorwiegend mit synthetischem Formationswasser folgender Zusammensetzung geflutet :

8,4 Gew.-% NaCl, 2,9 Gew.-% $CaCl_2$, 0,9 Gew.-% $MgCl_2$, pH = 6. Der Porenraum der Bohrkerne oder der auf einem Rütteltest hergestellten Sandschüttuung wird mit dem Formationswasser ausgefüllt, das dann durch Rohöl bis auf 15 % wieder verdrängt wird. Da so ölgesättigte Material wird mit Formationswasser bei der Versuchstemperatur von 40 °C solange mit der Geschwindigkeit von 1,5 m/d geflutet, bis nach Durchsatz des zweifachen Porenvolumens ein Verwässerungsgrad von 99-100 % erzielt wird, was dem sekundären Wasserfluten entspricht. Es wird eine Entölung von ca. 70 % erreicht. Das zurückbleibende Öl steht dem anschließenden Tensidfluten zur Verfügung und wird als Restölsättigung $S_{OR}$ = 100 % angesetzt. Dem Tensidslug nachgeschaltet injeziert man zweckmäßigerweise sowohl aus Gründen der Mobilitätskontrolle als auch zum Schutz der Tensidlösung vor eindringendem Formationswaser einen Polymerslug. Hierzu wird ein Polymer oder Polymergemisch in einer solchen Konzentration im Formationswasser gelöst, daß die Viskosität wenigstens so hoch ist wie die des Öls. Als Polymere kommen hier in Frage Biopolymere, z. B. das unter dem Handelsnamen (R)FLOCON, Biopolymer 4800, von Pfitzer vertriebene Produkt, Polysaccharide oder Cellulosederivate, wie Hydroxiethylcellulose, z. B. (R)NATROSOL HH 250 von Hercules Powder, oder synthetische Polymere auf Basis ·Copolymeren, Polyacrylamiden und -acrylaten.

Prüfungen ab Sandpackungen, die an Kurzbohrkerzen bestätigt wurden :

| Tensidsystem | Gewichts-verhältnis Anion-/ Nonionic | $S_{OR}$, Gew.% |
|---|---|---|
| 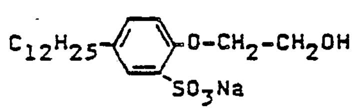 / 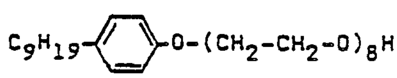 | 1:1 | 11 |
| " / " | 1:1,5 | 10 |
| 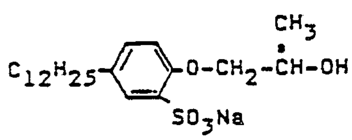 / 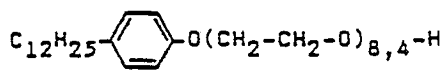 | 1:1 | 12 |
| 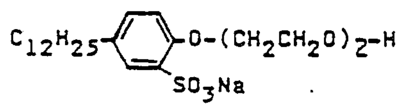 / 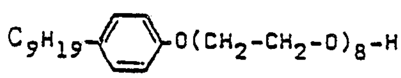 | 1:1 | .10 |
| 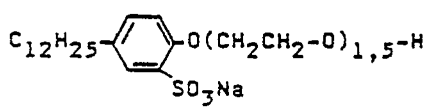 / 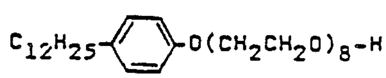 | 1:9 | 9 |
| 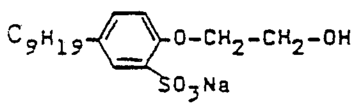 / 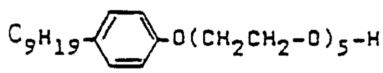 | 1:1 | 12 |
| zu CA 1 086 046 und DT 2 558 548 | | |
| 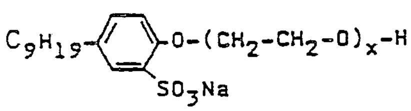 | | |
| " x = 3 | - | 55 |
| x = 5 | | 75 |
| x = 7,2 | | 64 |
| x = 9,5 | | 66 |
| 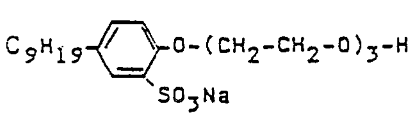 / 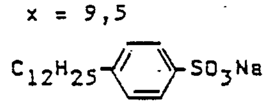 | 1:1 | 55 |

Prüfmethode: Slug-Fluten mit 0,1 Porenvolumen, 5 %ige Tensidlösung, so daß 2,5 % Tensid, bezogen auf das zu mobilisierende Öl, zur Verfügung stehen, mit 0,4 % Hydroxiethylcellulose in ca. 12 % Salz-Wasser nachgeflutet.

$S_{OR}$ = Restölsättigung in % von zur Prüfung zur Verfügung stehenden Ölmenge.

| Tensidsystem | Verhältnis | $S_{OR}$ % |
|---|---|---|
| zu US 3 811 505 | | |
| 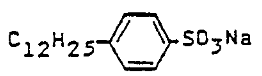 / 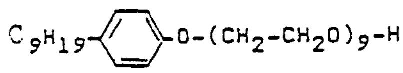 | 1:1 | 35 |
| zu CA 1 026 666 | | |
| $C_{12/14}$-Olefin-$SO_3Na$ / 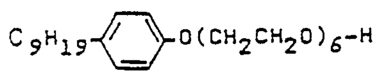 | 1:1 | 45 |

**Patentansprüche**

1. Tensidmischung für die Tertiärförderung von Erdöl, enthaltend als wesentliche Bestandteile

a) ein anionenaktives Tensid der Formel

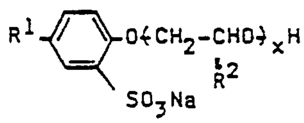

in der

$R^1$ eine geradkettige oder verzweigte Alkylgruppe mit 8 bis 15 Kohlenstoffatomen,

$R^2$ Wasserstoff oder Methyl und

x die Zahlen 1 bis 2 bedeutet,

b) ein nichtionisches Tensid der Formel

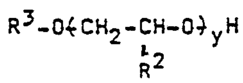

in der

$R^2$ Wasserstoff oder Methyl,

$R^3$ eine aliphatische Gruppe mit 9 bis 24 Kohlenstoffatomen oder eine Alkylarylgruppe, in der zumindest eine geradkettige oder verzweigte Alkylgruppe mit 8 bis 15 Kohlenstoffatomen gebunden ist,

y die Zahlen 3 bis 16 bedeutet

und wobei das Gewichtsverhältnis a : b 4 : 1 bis 1 : 10 beträgt.

2. Tensidmischung gemäß Anspruch 1, in der das Gewichtsverhältnis der Tenside (a) zu (b) 2 : 1 bis 1 : 9 beträgt.

3. Tensidmischungskonzentrat für die Tertiärförderung von Erdöl, enthaltend die Tensidmischung gemäß Anspruch 1 und bis zu 40 Gew.%, bezogen auf das Konzentrat, an Wasser.

4. 1 bis 20 gew.%ige wäßrige Lösungen einer Tensidmischung gemäß Anspruch 1 für die Tertiärförderung von Erdöl.

5. Verwendung von Tensidmischungen, Tensidmischungskonzentraten oder wäßrigen Tensidmischungslösungen gemäß Anspruch 1, 2 oder 3 für die Tertiärförderung von Erdöl.

6. Verfahren zur Tertiärförderung von Erdöl, dadurch gekennzeichnet, daß man

A) in einem ersten Schritt in die Erdöllagerstätte eine 1 bis 20 gew.%ige wäßrige Lösung einer Tensidmischung einpreßt, die als wesentliche Bestandteile

a) ein anionenaktives Tensid der Formel

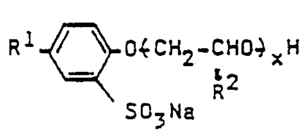

in der

$R^1$ eine geradkettige oder verzweigte Alkylgruppe mit 8 bis 15 Kohlenstoffatomen,

$R^2$ Wasserstoff oder Methyl und
x die Zahlen 1 bis 2 bedeutet,
b) ein nichtionisches Tensid der Formel

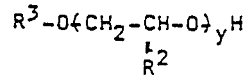

in der
$R^2$ Wasserstoff oder Methyl
$R^3$ eine aliphatische Gruppe mit 9 bis 24 Kohlenstoffatomen oder eine Alkylarylgruppe, in der zumindest eine geradkettige oder verzweigte Alkylgruppe mit 8 bis 15 Kohlenstoffatomen gebunden ist,
y die Zahlen 3 bis 16 bedeutet
und wobei das Gewichtsverhältnis a : b 4 : 1 bis 1 : 10 beträgt, und

B) in einem zweiten Schritt in an sich bekannter Weise Formationswasser, das mit einem Polymeren verdickt ist, nachpreßt und zusätzliche Mengen Erdöl, die mit primären und sekundären Fördermethoden nicht mehr gewinnbar sind, gewinnt.

## Claims

1. A surfactant mixture for tertiary oil production, which contains, as essential components,
a) an anionic surfactant of the formula

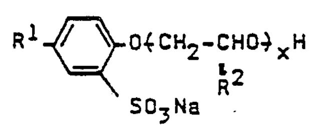

where
$R^1$ is straight-chain or branched alkyl of 8 to 15 carbon atoms,
$R^2$ is hydrogen or methyl, and
x is 1 or 2, and
b) a non-ionic surfactant of the formula

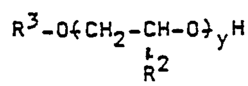

where
$R^2$ is hydrogen or methyl,
$R^3$ is an aliphatic group of 9 to 24 carbon atoms or alkylaryl in which one or more straight-chain or branched alkyl groups of 8 to 15 carbon atoms are bonded, and
y is 3 to 16,
the weight ratio of (a) to (b) being from 4 : 1 to 1 : 10.

2. A surfactant mixture as claimed in claim 1, wherein the weight ratio of surfactant (a) to surfactant (b) is from 2 : 1 to 1 : 9.

3. A surfactant mixture concentrate for tertiary oil production, which contains the surfactant mixture as claimed in claim 1 and up to 40 % by weight, based on the concentrate, of water.

4. A 1-20 % strength by weight aqueous solution of a surfactant mixture as claimed in claim 1 for tertiary oil production.

5. The use of a surfactant mixture, a surfactant mixture concentrate and an aqueous solution of a surfactant mixture as claimed in claims 1, 2 and 3 respectively for tertiary oil production.

6. A process for tertiary oil production, wherein
A) in a first step, a 1-20 % strength by weight aqueous solution of a surfactant mixture which contains, as essential components,
a) an anionic surfactant of the formula

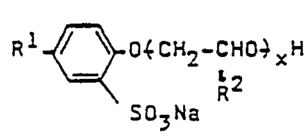

where
$R^1$ is straight-chain or branched alkyl of 8 to 15 carbon atoms,

$R^2$ is hydrogen or methyl, and
x is 1 or 2, and
b) a non-ionic surfactant of the formula

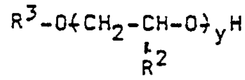

where
$R^2$ is hydrogen or methyl,
$R^3$ is an aliphatic group of 9 to 24 carbon atoms or alkylaryl in which one or more straight-chain or branched alkyl groups of 8 to 15 carbon atoms are bonded, and
y is 3 to 16,
the weight ratio of (a) to (b) being from 4 : 1 to 1 : 10, is forced into the oil reservoir, and

B) in a second step, formation water which has been thickened with a polymer is subsequently forced in a conventional manner, and additional amounts of oil, which cannot be recovered by primary and secondary methods, are obtained.

## Revendications

1. Mélange d'agents tensio-actifs pour l'exploitation tertiaire de pétrole brut, contenant, en tant que constituants essentiels :

a) un agent tensio-actif anionique de formule générale

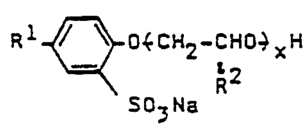

dans laquelle
$R^1$ représente un groupe alkyle à 8-15 atomes de carbone à chaîne droite ou ramifiée,
$R^2$ un atome d'hydrogène ou un groupe méthyle
x un nombre de 1 à 2,

b) un agent tensio-actif non ionique de formule

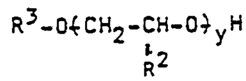

dans laquelle
$R^2$ représente un atome d'hydrogène ou un groupe méthyle,
$R^3$ un groupe aliphatique à 9-24 atomes de carbone ou un groupe alkylaryle dans lequel est fixé au moins un groupe alkyle à 8-15 atomes de carbone à chaîne droite ou ramifiée,
y un nombre de 3 à 16,
le rapport en poids a : b étant compris entre 4 : 1 et 1 : 10.

2. Mélange d'agents tensio-actifs selon la revendication 1, dans lequel le rapport en poids des agents tensio-actifs (a) et (b) est compris entre 2 : 1 et 1 : 9.

3. Concentré de mélange d'agents tensio-actifs pour l'exploitation tertiaire de pétrole brut, contenant le mélange d'agents tensio-actifs selon la revendication 1 et jusqu'à 40 % en poids d'eau sur la base du concentré.

4. Solutions aqueuses à 1-20 % en poids d'un mélange d'agents tensio-actifs selon la revendication 1, pour l'exploitation tertiaire de pétrole brut.

5. Utilisation de mélanges d'agents tensio-actifs, de concentrés de mélange d'agents tensio-actifs ou de solutions aqueuses de mélange d'agents tensio-actifs selon l'une quelconque des revendications 1 à 3 pour l'exploitation tertiaire de pétrole brut.

6. Procédé d'exploitation tertiaire de pétrole brut, caractérisé en ce que :

A) en un premier temps, on injecte, dans le gisement de pétrole, une solution aqueuse à 1-20 % en poids d'un mélange d'agents tensio-actifs qui contient, en tant que constituants essentiels :

a) un agent tensio-actif anionique de formule générale

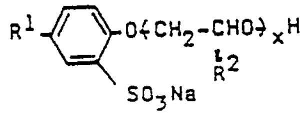

dans laquelle

$R^1$ représente un groupe alkyle à 8-15 atomes de carbone à chaîne droite ou ramifiée,

$R^2$ un atome d'hydrogène ou un groupe méthyle

x un nombre de 1 à 2,

b) un agent tensio-actif non ionique de formule

$$R^3-O-(CH_2-\underset{\displaystyle R^2}{\underset{|}{CH}}-O)_y-H$$

dans laquelle

$R^2$ représente un atome d'hydrogène ou un groupe méthyle,

$R^3$ un groupe aliphatique à 9-24 atomes de carbone ou un groupe alkylaryle dans lequel est fixé au moins un groupe alkyle à 8-15 atomes de carbone à chaîne droite ou ramifiée,

y un nombre de 3 à 16,

le rapport en poids a : b étant compris entre 4 : 1 et 1 : 10,

B) en un second temps, on poursuit l'injection, de façon connue en soi, avec de l'eau de formation qui est épaissie avec un polymère et on récupère des quantités supplémentaires de pétrole qui ne peuvent plus être récupérées par les méthodes d'exploitation primaire et secondaire.